# EUROPEAN PATENT SPECIFICATION

(11) **EP 4 384 703 B1**
(45) Date of publication and mention of the grant of the patent: **01.04.2026**
(21) Application number: 22760966.6
(22) Date of filing: 04.08.2022
(51) Int. Cl.: F03D 7/02

(54) **METHOD OF STOPPING AN OPERATION OF A FLOATING WIND TURBINE**
VERFAHREN ZUM ANHALTEN EINER OPERATION EINER SCHWIMMENDEN WINDTURBINE
PROCÉDÉ D'ARRÊT D'UNE OPÉRATION D'UNE TURBINE ÉOLIENNE FLOTTANTE

(30) Priority: 09.08.2021 EP 21190331
(43) Date of publication of application: 19.06.2024
(73) Proprietor: Siemens Gamesa Renewable Energy A/S, 7330 Brande (DK)
(72) Inventor: CAVICHIOLI GONZAGA, Carlos Alberto, 7100 Vejle (DK); ESBENSEN, Thomas, 7400 Herning (DK); STEFFENSEN, Henrik, 8000 Århus (DK)
(74) Representative: SGRE-Association
(86) International application number: PCT/EP2022/071943
(87) International publication number: WO 2023/016911

(56) References cited:
- EP-A1- 2 924 280
- EP-A1- 3 343 029
- WO-A2-2010/084131
- US-A1- 2008 290 664

## Description

### Field of invention

The present invention relates to a method of stopping an operation of a floating wind turbine.

Floating wind turbines are complex systems with multiple variables and multiple degrees of freedom. Wind, wave and current loadings, which all are irregular by nature along with aerodynamical, structural and hydrodynamical couplings, as well as control actuations, all contribute to a highly complex dynamical behaviour.

During the operation of a floating wind turbine, stop requests are associated with several alarms. Nonetheless, those profiles are optimized for turbines with a bottom fixed foundation, and a stop strategy can lead to an amplified floater motion when applied to the floating wind turbine. Therefore, a specific control strategy for determining a suitable shutdown strategy for a floating wind turbine is necessary. EP 2 924 280 A1 is an example of prior art.

### Summary of the Invention

It is the object to provide a method of stopping an operation of a floating wind turbine, which takes the above need into account. This object is achieved by the subject matter according to the independent claim. The present invention is further developed as set forth in the dependent claims.

According to an aspect of the invention, a method according to claim 1 of stopping an operation of a floating wind turbine is provided. The wind turbine comprises a floating body, a tower mounted to the floating body, a nacelle mounted to the tower, a rotating hub rotatable mounted to the nacelle and having a plurality of blades, and a generator connected to the hub for generating electric power. The method comprises the steps of receiving a stop request for stopping the operation of a floating wind turbine; determining whether or not the stop request is non-critical to allow a delay or attenuation of stopping the operation of the floating wind turbine; and delaying or attenuating the stopping of the operation of the floating wind turbine, when the delay of stopping the operation of the floating wind turbine is allowed, so as to attenuate a wind turbine pitch movement.

The term "stopping an operation of a floating wind turbine" is to be understood as such, that not necessarily the rotor of the wind turbine comes to a complete halt, but may also include that the wind turbine terminates to feed electrical energy into an electrical energy grid, that the rotor may still rotate while the at least one rotor blade is essentially in a feathered position. In particular, the term does not necessarily require the wind turbine to perform the entire stopping process, but may also include at least a portion of such stopping process.

In an embodiment, a blade pitch angle of at least one rotor blade is controlled based on a blade pitch angle reference. The use of the blade pitch angle reference comes with remarkable benefits for controlling the needs of accuracy and/or reaction behaviour. In particular, the blade pitch angle of at least one rotor blade is not subject to a threshold applied to the blade pitch angle changing rate; by this, the control of the blade pitch angle becomes more accurate. The method comprises steps of detecting an amount of a floating body movement, a blade load moment and/or a tower top movement to determine whether a wind turbine pitch movement is upwind or downwind. This may include determining the position of the wind turbine pitch movement, in particular at what point of inclination the wind turbine is currently in. Additionally or alternatively, this may include determining an oscillation frequency of the wind turbine pitch movement, respective oscillation speed, and/or oscillation acceleration. After having received the stop request, selecting, based on the determination as to whether the wind turbine pitch movement is upwind or downwind, in particular, whether the tower top movement is upwind or downwind, a cut-off frequency of a low-pass-filter for the blade pitch angle reference; if the wind turbine pitch movement is upwind, or if the wind turbine is at its most upwind oscillation position, or if the wind turbine is in the process of moving from an upwind position to a downwind position, filtering the blade pitch angle reference by the low-pass filter having a first cut-off frequency; and if the wind turbine pitch movement is downwind, or if the wind turbine is at its most downwind oscillation position, or if the wind turbine is in the process of moving from a downwind position to an upwind position, filtering the blade pitch angle reference by the low-pass filter having a second cut-off frequency. Furthermore, the first cut-off frequency being lower than the second cut-off frequency. This control strategy is based on a linear filtering of the shutdown reference pitch angle profile instead of a rate limiting which is a nonlinear element.

According to an embodiment, this control strategy adaptively filters the blade pitch reference in a non-critical shutdown with a bandwidth depending on different quantities such as tower top motion and/or blade load moment and/or floater motion.

In an embodiment, the wind turbine further comprises an additional blade actuator which is arranged at a surface of the blade, wherein the additional blade actuator is controlled based on an additional blade actuator reference, and the method comprises steps of detecting an amount of a floating body movement, a blade load moment and/or a tower top movement to determine whether a wind turbine pitch movement is upwind or downwind; after having received the stop request, selecting, based on the determination as to whether the wind turbine pitch movement is upwind or downwind, a cut-off frequency of another low-pass-filter for the additional blade actuator reference; if the wind turbine pitch movement is upwind, filtering the additional blade actuator reference by the other low-pass filter having a third cut-off frequency; and if the wind turbine pitch movement is downwind, filtering the blade additional blade actuator reference by the other low-pass filter having a fourth cut-off frequency; wherein the third cut-off frequency being lower than the fourth cut-off frequency.

In an embodiment, the method comprises the steps of detecting an amount of a floating body movement, a blade load moment and/or a tower top movement to determine whether a wind turbine pitch movement is upwind or downwind; delaying the stopping of the operation of the floating wind turbine if the wind turbine pitch movement is upwind; detecting when a tower top position is substantially at a most upwind position; and initiating the stopping of the operation of the floating wind turbine after the tower top position has substantially reached the most upwind position. This control strategy provides a time schedule for starting a shutdown procedure that is qualified for a delay.

In an embodiment, a power output from the generator is controlled based on a power output reference, and the method comprises steps of delaying the stopping of the operation of the floating wind turbine, while increasing the power output to reduce a rotor speed (i.e., a hub rotating speed); and initiating the stopping of the operation of the wind turbine after having reduced the rotor speed. This control strategy makes the floater motion well behaved using the power reference. In an embodiment, the stopping of the operation of the wind turbine can be achieved by increasing a blade pitch reference for increasing a blade pitch angle of the blades.

Advantageously, the present invention avoids extreme loads which potentially arise due to an unfavourable combination of high floater velocity, wind and wave conditions with a shutdown, as shutdowns may happen several times during the lifespan of the floating wind turbine. The present invention further provides an advantage in terms of shutdowns that are non-critical for an operation of the floating wind turbine by using a main actuation means, which is the blade pitch angle, combined with its starting time instant and the output power reference.

According to an aspect, a floating wind turbine is disclosed. The wind turbine comprises a floating body, a tower mounted to the floating body, a nacelle mounted to the tower, a rotor rotatable mounted to the nacelle and having a hub and at least one blade, in particular a plurality of blades, a generator connected to the rotor for generating electric power, and a controller, wherein the controller is configured to carry out the method according to one of the precedingly described embodiments of a method.

Therefore, the inventive wind turbine brings up the same advantages that have been discussed in detail with respect to the inventive method. The wind turbine may be configured and comprise further suitable means like sensors, actuators, a controller and/or a computer being configured to carry out any one of the above described methods.

An additional aspect of the present invention relates to a computer program product comprising instructions to cause the above described system to carry out the inventive method. Furthermore, a computer-readable, preferably non-volatile, storage medium having stored thereon the computer program product, is provided. Hence, the inventive computer program product and the inventive computer-readable storage medium bring up the above described advantages as well.

The computer program product may be implemented as a computer-readable instruction code in any suitable programming language and/or machine language, such as JAVA, C++, C#, and/or Python. The computer program product may be stored on a computer-readable storage medium such as a data disk, a removable drive, volatile or non-volatile memory, or a built-in memory/processor. The instruction code may program a computer or other programmable devices such as a controller and/or computer in order to perform the desired functions. Further, the computer program product may be provided and/or be on a network, such as the internet, from which a user may download it as needed. The computer program product may be implemented by means of software, as well as by means of one or more special electronic circuits, that is, in hardware or in any hybrid form, that is, by means of software components and hardware components.

According to a further additional or alternative aspect of the invention a method for operating the floating offshore wind turbine as disclosed. The method comprises controlling the floating offshore wind turbine according to any one of the embodiments of the previously described.
In addition or alternatively, the method for operating an offshore wind turbine may comprise generating, by the offshore wind turbine, electrical power and/or electrical energy, transmitting at least a part of the electrical power and/or of the electrical energy to an electrical receiving arrangement not positioned in international waters, in particular positioned on land, onshore, and supplying at least a part of the electrical power and/or of the electrical energy to a utility grid, in particular onshore utility grid.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief description of the figures

Fig. 1 shows a floating wind turbine and the different elements thereof; and
Fig. 2 shows a flow chart of an embodiment of the method of stopping an operation of the floating wind turbine;
Fig. 3 shows a block diagram of an embodiment of the method of stopping an operation of the floating wind turbine;
Fig. 4 shows a flow chart of an embodiment of a method of stopping an operation of the floating wind turbine; and
Fig. 5 shows a block diagram of an embodiment of the method of stopping an operation of the floating wind turbine.

### Detailed Description

The illustrations in the drawings are schematically. It is noted that in different figures, similar or identical elements are provided with the same reference signs.

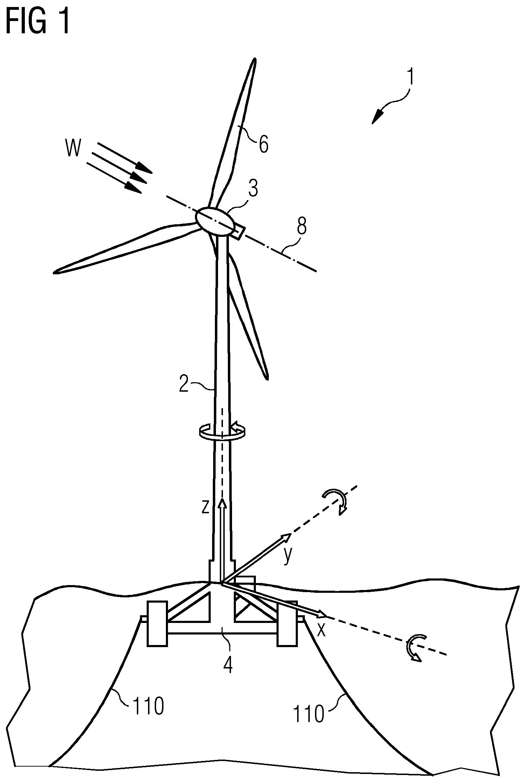

**Fig. 1** shows a floating wind turbine 1. The wind turbine 1 comprises a nacelle 3 and a tower 2. The nacelle 3 is mounted at the top of the tower 2. The nacelle 3 is mounted rotatable relative to the tower 2 by means of a yaw bearing in order to establish a nacelle yaw.

The wind turbine 1 also comprises a rotor having at least one rotor blade 6, in particular having a hub and at least one rotor blade supported by the hub. According to the present embodiment the rotor comprises three rotor blades 6 each being connected to the hub. Each blade 6 can usually be rotated about a longitudinal axis of the blade 6 to establish a desired rotor blade pitch angel (or pitch angle) of the blade 6.

The rotor is rotatable mounted relative to the nacelle 3 by means of a bearing. The rotor is mounted rotatable about a rotation axis 8. When the blades 6 are subjected to a wind W, they are rotated together with the rotor about the rotation axis 8.

The wind turbine 1 furthermore comprises a generator. The generator is accommodated within the nacelle 3. The generator is arranged and prepared for converting rotational energy from the rotor into electrical energy in the shape of an AC power.

The floating wind turbine 1 is an offshore wind turbine 1 comprising a floating hull 4 to which the tower 2 is mounted. The hull 4 floats on a sea level of the sea. The hull 4 is connected the sea ground via mooring lines 110. The installed offshore wind turbine 1 floats in the water and is normally held in position by the mooring lines 110 which either stabilize the system or prevent the same from drifting away.

The floating wind turbine 1 has six individual degrees of freedom in which the wind turbine 1 may move. Namely three translations along a surge axis x, a sway axis y, and a heave axis z along with a floater roll rotation around the axis x, a floater pitch rotation around the axis y, and a floater yaw rotation around the axis z.

The floater pitch about the floater pitch axis y is thus different from the blade pitch because the pitch about the floater pitch axis y is the rotation of the floating structure (for example the tower 2 or the entire wind turbine 1) around its point of rotation, while the blade pitch defines the controlled pitch angle of the blades 6 about the longitudinal axis thereof. Furthermore, the floater yaw about the floater yaw axis z is different from a nacelle yaw because the floater yaw about the floater yaw axis z is the rotation around the vertical axis of the floating structure (for example the tower 2 or the entire wind turbine 1), while the nacelle yaw is the yaw of the nacelle 3 which can be measured relatively to the tower 2 and actively be controlled by the wind turbine 1.

For the sake of clarity, a floater pitch velocity in Fig. 1 is positive, whenever the rotation leads the tower top downwind and negative when the rotation leads the tower top upwind.

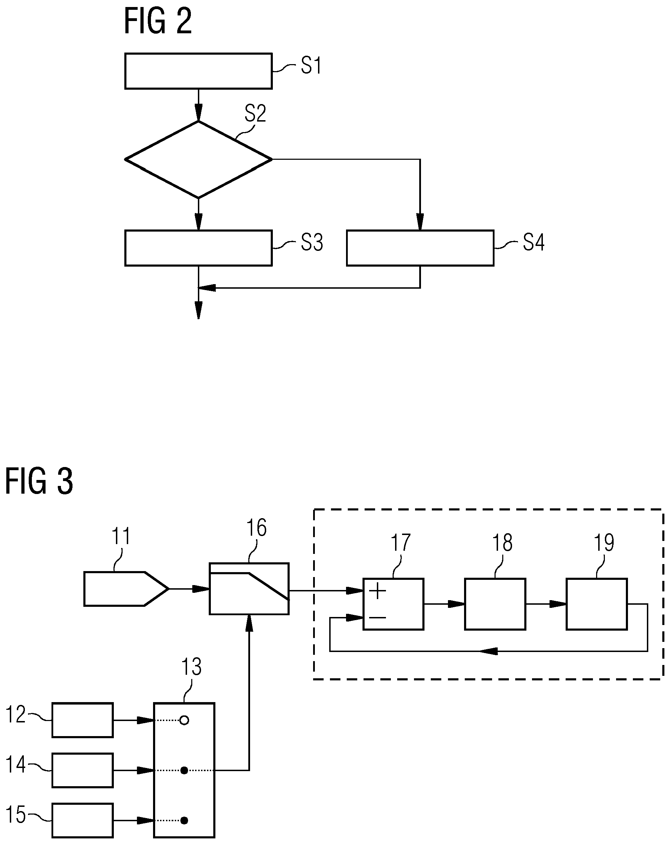

**Fig. 2** shows a flow chart of a method of stopping an operation of the floating wind turbine 1 according to an embodiment. In a step S1, a stop request for stopping the operation of a floating wind turbine 1 is received. In a step S2, it is determining whether or not the stop request is non-critical to allow a delay or attenuation of stopping the operation of the floating wind turbine 1. If the stop request is non-critical to allow a delay or attenuation of stopping the operation of the floating wind turbine 1, the method proceeds to a step S3, where the stopping of the operation of the floating wind turbine 1 is delayed or attenuated, so as to attenuate the wind turbine pitch movement. If the stop request is critical to not allow the delay or attenuation of stopping the operation of the floating wind turbine 1, the method proceeds to a step S4, where the operation of the floating wind turbine 1 can immediately be stopped.

**Fig. 3** shows a block diagram of an embodiment of the method of stopping an operation of the floating wind turbine 1, in particular an embodiment of step S3 in Fig. 2. Generally, a blade pitch angle of each blade 6 is controlled based on a blade pitch angle reference. Such blade pitch reference is input by a blade pitch angle reference block 11 into a low-pass filter 16.

An amount of a floating body movement, a blade load moment and/or a tower top movement is detected in a floating body movement detecting block 12 to determine whether a wind turbine pitch movement is upwind or downwind. I.e., the blade load moment is expected to change in accordance to a floating foundation pitch movement due to a change in effective wind speed. The amount of the floating body movement is input in a selection block 13. In addition, a first cut-off frequency 14 for an upwind movement of the wind turbine 1 is input into the selection block 13, and a second cut-off frequency 15 for a downwind movement of the wind turbine 1 is input into the selection block 13.

In the selection block 13, it is determined, based on the amount of the floating body movement, if the wind turbine pitch movement is upwind or downwind, in particular whether the tower top movement is upwind or downwind. If the wind turbine pitch movement is upwind, the first cut-off frequency 14 is selected and input into the low-pass filter 16. Otherwise, if the wind turbine pitch movement is downwind, the second cut-off frequency 15 is selected and input into the low-pass filter 16.

In the low-pass filter 16, the blade pitch angle reference is then filtered by the first cut-off frequency 14 if the wind turbine pitch movement is upwind. Otherwise, the blade pitch angle reference is filtered by the second cut-off frequency 15 if the wind turbine pitch movement is downwind.

The filtered blade pitch reference is output from the low-pass filter 16 into a comparator 17 which generates a difference between a measured blade pitch and the filtered blade pitch reference. The difference is input from the comparator 17 into pitch system controller 18 which generates a blade pitch signal for feedback-controlling the blade pitch. A blade pitch signal is output from the pitch system controller 18 into a pitch actuator 19 which pitches the corresponding blade 6.

The comparator 17, the pitch system controller 18 and the pitch actuator 19 altogether form a blade pitch control system.

An element of this control strategy is the shutdown low-pass filter 16 added between the blade pitch angle reference block 11 and the blade pitch control system. The strategy can be summarized in the following steps:
a) A shutdown is requested;
b) The blade pitch angle command for shutdown is sent to blade pitch control system through the blade pitch angle reference block 11;
c) The shutdown reference low-pass filter 16 is activated;
d) A floater motion and/or tower top quantity is measured/monitored and used to define the cut-off frequency as follows:
   i. The (upwind) first cut-off frequency 14 is selected if turbine top is moving upwind. This cut-off frequency 14 is low enough to filter out fast pitch commands.
   ii. The (downwind) second cut-off frequency 15 is selected if turbine top is moving downwind. This cut-off frequency 15 is high enough to allow faster pitch commands than when moving upwind.
e. The filtered blade pitch reference is sent to the blade pitch control system.

It should be noted also that, in addition to the blade pitch control, additional blade actuators might be included such as blade add-ons or active flaps which are arranged at a surface of the blade 6. The additional blade actuators modify the aerodynamic behavior of the blade 6. The additional blade actuator is controlled based on an additional blade actuator reference, and the method of this embodiment comprises steps of detecting an amount of a floating body movement, a blade load moment and/or a tower top movement to determine whether a wind turbine pitch movement is upwind or downwind; after having received the stop request, selecting, based on the determination as to whether the wind turbine pitch movement is upwind or downwind, a cut-off frequency of the additional blade actuator reference; if the wind turbine pitch movement is upwind, filtering the additional blade actuator reference by another low-pass filter having a third cut-off frequency; and if the wind turbine pitch movement is downwind, filtering the blade additional blade actuator reference by the other low-pass filter having a fourth cut-off frequency; wherein the third cut-off frequency being lower than the fourth cut-off frequency.

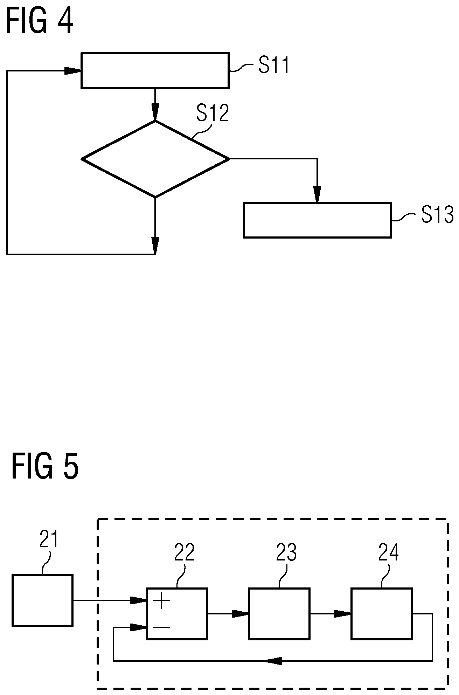

**Fig. 4** shows a flow chart of an embodiment of a method of stopping an operation of the floating wind turbine 1, in particular an embodiment of step S3 in Fig. 2. In a step S11, an amount of a floating body movement, a blade load moment and/or a tower top movement is detected to determine whether a wind turbine pitch movement is upwind or downwind. Based on the result, it is detected when a tower top position is substantially at a most upwind position, i.e., at a reversal point. If it is detected that the tower top position is not substantially at the most upwind position, the method goes back to step S11 to delay stopping the operation of the floating wind turbine 1. Otherwise, if it is detected that the tower top position is substantially at the most upwind position, the method proceeds to a step S13, where the operation of the floating wind turbine 1 is eventually stopped, for example by conventional stopping procedures such as blade pitching, etc.

This control strategy improves the floater pitch motion behavior by computing a time instant for a shutdown procedure that is qualified for a delay. It can be summarized by the following steps:
a) A shutdown is requested;
b) A stop is initiated when the floater pitch velocity transitions from negative to positive (tower top position is substantially at the most upwind point);
c) A normal stop procedure is performed, like ramping down power and increasing blade pitch angles to reduce speed and power. As a consequence, a thrust force is further reduced by the blade pitch angle which comes at an optimum time because the tower is moving forward.

**Fig. 5** shows a block diagram of an embodiment of a method of stopping an operation of the floating wind turbine 1, in particular an embodiment of step S3 in Fig. 2. Generally, a power output from the generator is controlled based on a power output reference.

A speed reference is input from a (rotor) speed reference block 21 into a comparator 22 which generates a difference between a measured rotor speed and the speed reference. The difference is input from the comparator 22 into speed-power controller 23 which controls the rotor speed. When a stop request for stopping the operation of a floating wind turbine 1 is received, the stopping of the operation of the floating wind turbine 1 is delayed, and a power reference correction value is input into the speed-power controller 23 to increase the power reference, thereby reducing a rotor speed.

After having reduced the rotor speed, the stopping of the operation of the wind turbine 1 is initiated. Reference sign 24 designates a plant of the wind turbine 1, which outputs the rotor speed measurement.

The method of stopping an operation of the floating wind turbine 1 comprises a step of delaying the stopping of the operation of the floating wind turbine 1, while reducing the power output to reduce a rotor speed. The stopping of the operation of the wind turbine 1 is initiated after having reduced the power output. For example, the stopping of the operation of the wind turbine 1 can be achieved by increasing the blade pitch reference (see Fig. 3) for increasing a blade pitch angle of the blades 6.

The power output reference is advantageously used to produce a counter-torque for a rotor speed deacceleration. The power output reference is reduced according to the rotor speed reduction so that the physical maximum generator torque constraint is verified. The thrust force is reduced because of a lower rotor speed, and a floater motion amplitude is reduced.

This procedure can be combined with the embodiment of Fig. 3 of controlling the command to increase the blade pitch angle until a stop position.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method of stopping an operation of a floating wind turbine (1), said wind turbine (1) comprising a floating body (4), a tower (2) mounted to the floating body (4), a nacelle (3) mounted to the tower (2), a rotor rotatable mounted to the nacelle (3) and having a hub and at least one blade (6), in particular a plurality of blades (6), and a generator connected to the rotor for generating electric power, and wherein the method comprises the steps of:
receiving a stop request for stopping the operation of a floating wind turbine (1);
determining whether or not the stop request is non-critical for allowing a delay of stopping the operation of the floating wind turbine (1);
if the delay of stopping the operation of the floating wind turbine (1) is allowed or if the request is non-critical,
delaying the stopping of the operation of the floating wind turbine so as to attenuate a wind turbine pitch movement and thereby to avoid extreme loads which potentially arise due to an unfavorable combination of high floater velocity, wind and wave conditions with a shutdown of the floating wind turbine (1); and
if the stop request is critical to not allow the delay of stopping the operation of the floating wind turbine,
immediately stopping (S4) the operation of the floating wind turbine (1).

2. The method according to the preceding claim, wherein a blade pitch angle of each blade (6) is controlled based on a blade pitch angle reference, and wherein the method comprises steps of:
detecting an amount of a floating body movement, a blade load moment and/or a tower top movement and/or determining an oscillation frequency of the wind turbine pitch movement, respective oscillation speed, and/or oscillation acceleration to determine whether a wind turbine pitch movement is upwind or downwind;
after having received the stop request, selecting, based on the determination as to whether the wind turbine pitch movement is upwind or downwind, a cut-off frequency of a low-pass-filter for the blade pitch angle reference;
if the wind turbine pitch movement is upwind, filtering the blade pitch angle reference by the low-pass filter (16) having a first cut-off frequency (14); and
if the wind turbine pitch movement is downwind, filtering the blade pitch angle reference by the low-pass filter (16) having a second cut-off frequency (15); and
the first cut-off frequency (14) being lower than the second cut-off frequency (15).

3. The method according to the preceding claim, wherein a bandwidth of the low-pass filter (16) is determined in dependency on tower top motion and/or blade load moment and/or floater motion.

4. The method according to any one of the preceding claims, wherein the wind turbine (1) further comprises an additional blade actuator which is arranged at a surface of the blade (6), wherein the additional blade actuator is controlled based on an additional blade actuator reference, and wherein the method comprises steps of:
detecting an amount of a floating body movement, a blade load moment and/or a tower top movement and/or determining an oscillation frequency of the wind turbine pitch movement, respective oscillation speed, and/or oscillation acceleration to determine whether a wind turbine pitch movement is upwind or downwind;
after having received the stop request, selecting, based on the determination as to whether the wind turbine pitch movement is upwind or downwind, a cut-off frequency of another low-pass filter for the additional blade actuator reference;
if the wind turbine pitch movement is upwind, filtering the additional blade actuator reference by the other low-pass filter having a third cut-off frequency; and
if the wind turbine pitch movement is downwind, filtering the blade additional blade actuator reference by the other low-pass filter having a fourth cut-off frequency; and
the third cut-off frequency being lower than the fourth cut-off frequency.

5. The method according to any one of the preceding claims, comprising the steps of:
detecting an amount of a floating body movement, a blade load moment and/or a tower top movement and/or determining an oscillation frequency of the wind turbine pitch movement, respective oscillation speed, and/or oscillation acceleration to determine whether a wind turbine pitch movement is upwind or
downwind;
delaying the stopping of the operation of the floating wind turbine (1) if the wind turbine pitch movement is upwind;
detecting when a tower top position is substantially at a most upwind position and/or when the floater pitch velocity transitions from negative to positive; and
initiating the stopping of the operation of the floating wind turbine after the tower top position substantially has reached the most upwind position.

6. The method according to any one of the preceding claims, wherein
a power output from the generator is controlled based on a power output reference, and the method comprises steps of:
delaying the stopping of the operation of the floating wind turbine (1), while increasing the power output to reduce a rotor speed, in particular while not increasing or decreasing a blade pitch angle of at least one of the rotor blades; and
initiating the stopping of the operation of the wind turbine (1) after having reduced the rotor speed.

7. The method according to the preceding claim, wherein
the stopping of the operation of the wind turbine (1) is achieved by increasing a blade pitch reference for increasing a blade pitch angle of the blades (6).

8. A floating wind turbine (1) comprising a floating body (4), a tower (2) mounted to the floating body (4), a nacelle (3) mounted to the tower (2), a rotor rotatable mounted to the nacelle (3) and having a hub and at least one blade (6), in particular a plurality of blades (6), a generator connected to the rotor for generating electric power, and a controller, wherein the controller is configured to carry out the method according to one of the preceding claims.

9. A computer program product comprising instructions to cause the controller of the floating wind turbine (1) of claim 8 to carry out the method of claims 1 to 7.

10. A computer-readable storage medium having stored thereon the computer program product of claim 9.

11. A method of operating a floating offshore wind turbine (1), comprising operating the floating offshore wind turbine (1) of claim 8 and/or stopping the floating offshore wind turbine (1) according to a method according to claims 1 to 7.

12. The method of claim 11 comprising generating, by the offshore wind turbine (1), electrical power and/or electrical energy.

13. The method of claim 12 comprising transmitting at least a part of the electrical power and/or of the electrical energy to an electrical receiving arrangement not positioned in international waters, in particular positioned on land, onshore; and supplying at least a part of the electrical power and/or of the electrical energy to a utility grid, in particular onshore utility grid.

## Patentansprüche

1. Verfahren zum Anhalten eines Betriebs einer schwimmenden Windturbine (1), wobei die Windturbine (1) einen schwimmenden Körper (4), einen Turm (2), der an dem schwimmenden Körper (4) montiert ist, eine Gondel (3), die an dem Turm (2) montiert ist, einen Rotor, der drehbar an der Gondel (3) montiert ist, umfasst und eine Nabe und mindestens ein Blatt (6), insbesondere eine Vielzahl von Blättern (6), und einen Generator aufweist, der mit dem Rotor verbunden ist, um elektrische Leistung zu erzeugen, und wobei das Verfahren die folgenden Schritte umfasst:
Empfangen einer Anhaltanforderung zum Anhalten des Betriebs einer schwimmenden Windturbine (1); Bestimmen, ob die Anhaltanforderung unkritisch ist oder nicht, zum Erlauben einer Verzögerung des Anhaltens des Betriebs der schwimmenden Windturbine (1);
falls die Verzögerung des Anhaltens des Betriebs der schwimmenden Windturbine (1) erlaubt wird oder falls die Anforderung unkritisch ist,
Verzögern des Anhaltens des Betriebs der schwimmenden Windturbine, um eine Windturbinenneigungsbewegung zu dämpfen und dadurch extreme Lasten zu vermeiden, die möglicherweise aufgrund einer ungünstigen Kombination aus hoher Schwimmergeschwindigkeit, Wind- und Wellenbedingungen mit einer Abschaltung der schwimmenden Windturbine (1) entstehen; und
falls die Anhaltanforderung kritisch ist, die Verzögerung des Anhaltens des Betriebs der schwimmenden Windturbine nicht zu erlauben,
sofortiges Anhalten (S4) des Betriebs der schwimmenden Windturbine (1).

2. Verfahren nach dem vorhergehenden Anspruch, wobei ein Blattneigungswinkel eines jeden Blattes (6) basierend auf einer Blattneigungswinkelreferenz gesteuert wird und wobei das Verfahren die folgenden Schritte umfasst:
Erkennen einer Menge einer Schwimmkörperbewegung, eines Blattlastmoments und/oder einer Turmspitzenbewegung und/oder Bestimmen einer Oszillationsfrequenz der Windturbinenneigungsbewegung, einer jeweiligen Oszillationsgeschwindigkeit und/oder Oszillationsbeschleunigung, um zu bestimmen, ob eine Windturbinenneigungsbewegung gegen die Windrichtung oder in Windrichtung erfolgt;
nach dem Empfang der Anhaltanforderung, Auswählen, basierend auf der Bestimmung, ob die Windturbinenneigungsbewegung gegen die Windrichtung oder in Windrichtung erfolgt, einer Grenzfrequenz eines Tiefpassfilters für die Blattneigungswinkelreferenz;
falls die Windturbinenneigungsbewegung gegen die Windrichtung erfolgt, Filtern der Blattneigungswinkelreferenz durch den Tiefpassfilter (16), der eine erste Grenzfrequenz (14) aufweist; und
falls die Windturbinenneigungsbewegung in Windrichtung erfolgt, Filtern der Blattneigungswinkelreferenz durch den Tiefpassfilter (16), der eine zweite Grenzfrequenz (15) aufweist; und
wobei die erste Grenzfrequenz (14) niedriger als die zweite Grenzfrequenz (15) ist.

3. Verfahren nach dem vorhergehenden Anspruch, wobei eine Bandbreite des Tiefpassfilters (16) in Abhängigkeit von einer Turmspitzenbewegung und/oder einem Blattlastmoment und/oder einer Schwimmerbewegung bestimmt wird.

4. Verfahren nach einem der vorhergehenden Ansprüche, wobei die Windturbine (1) ferner einen zusätzlichen Blattaktor umfasst, der an einer Fläche des Blattes (6) angeordnet ist, wobei der zusätzliche Blattaktor basierend auf einer zusätzlichen Blattaktorreferenz gesteuert wird und wobei das Verfahren die folgenden Schritte umfasst:
Erkennen einer Menge einer Schwimmkörperbewegung, eines Blattlastmoments und/oder einer Turmspitzenbewegung und/oder Bestimmen einer Oszillationsfrequenz der Windturbinenneigungsbewegung, einer jeweiligen Oszillationsgeschwindigkeit und/oder Oszillationsbeschleunigung, um zu bestimmen, ob eine Windturbinenneigungsbewegung gegen die Windrichtung oder in Windrichtung erfolgt;
nach dem Empfang der Anhaltanforderung, Auswählen, basierend auf der Bestimmung, ob die Windturbinenneigungsbewegung gegen die Windrichtung oder in Windrichtung erfolgt, einer Grenzfrequenz eines weiteren Tiefpassfilters für die zusätzliche Blattaktorreferenz;
falls die Windturbinenneigungsbewegung gegen die Windrichtung erfolgt, Filtern der zusätzlichen Blattaktorreferenz durch den anderen Tiefpassfilter, der eine dritte Grenzfrequenz aufweist; und
falls die Windturbinenneigungsbewegung in Windrichtung erfolgt, Filtern der Blatt zusätzlichen Blattaktorreferenz durch den anderen Tiefpassfilter, der eine vierte Grenzfrequenz aufweist; und
wobei die dritte Grenzfrequenz niedriger als die vierte Grenzfrequenz ist.

5. Verfahren nach einem der vorhergehenden Ansprüche, das die folgenden Schritte umfasst:
Erkennen einer Menge einer Schwimmkörperbewegung, eines Blattlastmoments und/oder einer Turmspitzenbewegung und/oder Bestimmen einer Oszillationsfrequenz der Windturbinenneigungsbewegung, einer jeweiligen Oszillationsgeschwindigkeit und/oder Oszillationsbeschleunigung, um zu bestimmen, ob eine Windturbinenneigungsbewegung gegen die Windrichtung oder in Windrichtung erfolgt;
Verzögern des Anhaltens des Betriebs der schwimmenden Windturbine (1), falls die Windturbinenneigungsbewegung gegen die Windrichtung erfolgt;
Erkennen, wenn sich eine Position der Turmspitze im Wesentlichen in einer Position mit dem höchsten Gegenwind befindet und/oder wenn die Neigungsgeschwindigkeit des Schwimmers von negativ zu positiv übergeht; und
Einleiten des Anhaltens des Betriebs der schwimmenden Windturbine, nachdem die Position der Turmspitze im Wesentlichen die Position mit dem höchsten Gegenwind erreicht hat.

6. Verfahren nach einem der vorhergehenden Ansprüche, wobei
eine Leistungsausgabe von dem Generator basierend auf einer Leistungsausgabereferenz gesteuert wird und das Verfahren die folgenden Schritte umfasst:
Verzögern des Anhaltens des Betriebs der schwimmenden Windturbine (1), während die Leistungsausgabe erhöht wird, um eine Rotorgeschwindigkeit zu reduzieren, insbesondere während ein Blattneigungswinkel mindestens eines der Rotorblätter nicht erhöht oder reduziert wird; und
Einleiten des Anhaltens des Betriebs der Windturbine (1), nachdem die Rotorgeschwindigkeit reduziert wurde.

7. Verfahren nach dem vorhergehenden Anspruch, wobei
das Anhalten des Betriebs der Windturbine (1) durch Erhöhen einer Blattneigungsreferenz zum Erhöhen eines Blattneigungswinkels der Blätter (6) erreicht wird.

8. Schwimmende Windturbine (1), die einen schwimmenden Körper (4), einen Turm (2), der an dem schwimmenden Körper (4) montiert ist, eine Gondel (3), die an dem Turm (2) montiert ist, einen Rotor, der drehbar an der Gondel (3) montiert ist, umfasst und eine Nabe und mindestens ein Blatt (6), insbesondere eine Vielzahl von Blättern (6), einen Generator, der mit dem Rotor verbunden ist, um elektrische Leistung zu erzeugen, und eine Steuerung aufweist, wobei die Steuerung dazu konfiguriert ist, das Verfahren nach einem der vorhergehenden Ansprüche auszuführen.

9. Computerprogrammprodukt, das Anweisungen umfasst, um die Steuerung der schwimmenden Windturbine (1) nach Anspruch 8 dazu zu veranlassen, das Verfahren nach Anspruch 1 bis 7 auszuführen.

10. Computerlesbares Speichermedium, auf dem das Computerprogrammprodukt nach Anspruch 9 gespeichert ist.

11. Verfahren zum Betreiben einer schwimmenden Offshore-Windturbine (1), umfassend Betreiben der schwimmenden Offshore-Windturbine (1) nach Anspruch 8 und/oder Anhalten der schwimmenden Offshore-Windturbine (1) nach einem Verfahren nach den Ansprüchen 1 bis 7.

12. Verfahren nach Anspruch 11, umfassend Erzeugen, durch die Offshore-Windturbine (1), von elektrischer Leistung und/oder elektrischer Energie.

13. Verfahren nach Anspruch 12, umfassend Übertragen mindestens eines Teils der elektrischen Leistung und/oder der elektrischen Energie an eine elektrische Empfangsanordnung, die nicht in internationalen Gewässern positioniert, insbesondere an Land, Onshore, positioniert ist; und Zuführen mindestens eines Teils der elektrischen Leistung und/oder der elektrischen Energie an ein Versorgungsnetz, insbesondere ein Onshore-Versorgungsnetz.

## Revendications

1. Procédé d'arrêt du fonctionnement d'une éolienne flottante (1), ladite éolienne (1) comprenant un corps flottant (4), une tour (2) montée sur le corps flottant (4), une nacelle (3) montée sur la tour (2), un rotor monté de manière rotative sur la nacelle (3) et ayant un moyeu et au moins une pale (6), en particulier une pluralité de pales (6), et un générateur relié au rotor pour générer de la puissance électrique, et dans lequel le procédé comprend les étapes consistant à :
recevoir une demande d'arrêt pour arrêter le fonctionnement d'une éolienne flottante (1) ;
déterminer si la demande d'arrêt est critique ou n'est pas critique pour permettre un retard de l'arrêt du fonctionnement de l'éolienne flottante (1) ;
si le retard de l'arrêt du fonctionnement de l'éolienne flottante (1) est autorisé ou si la demande est non critique,
retarder l'arrêt du fonctionnement de l'éolienne flottante de manière à atténuer un mouvement de tangage d'éolienne et ainsi à éviter des charges extrêmes qui surviennent potentiellement en raison d'une combinaison défavorable de vitesse de flotteur élevée, de conditions de vent et de vagues avec un arrêt de l'éolienne flottante (1) ; et
si la demande d'arrêt est critique pour ne pas permettre le retard de l'arrêt du fonctionnement de l'éolienne flottante,
arrêter immédiatement (S4) le fonctionnement de l'éolienne flottante (1).

2. Procédé selon la revendication précédente, dans lequel un angle de calage de pale de chaque pale (6) est commandé sur la base d'une référence d'angle de calage de pale, et dans lequel le procédé comprend les étapes consistant à :
détecter une quantité d'un mouvement de corps flottant, un moment de charge de pale et/ou un mouvement de sommet de tour et/ou déterminer une fréquence d'oscillation du mouvement de tangage d'éolienne, une vitesse d'oscillation respective, et/ou une accélération d'oscillation pour déterminer si un mouvement de tangage d'éolienne est face au vent ou sous le vent ;
après avoir reçu la demande d'arrêt, sélectionner, sur la base de la détermination consistant à savoir si le mouvement de tangage d'éolienne est face au vent ou sous le vent, une fréquence de coupure d'un filtre passe-bas pour la référence d'angle de calage de pale ;
si le mouvement de tangage d'éolienne est face au vent, filtrer la référence d'angle de calage de pale par le filtre passe-bas (16) ayant une première fréquence de coupure (14) ; et si le mouvement de tangage d'éolienne est sous le vent, filtrer la référence d'angle de calage de pale par le filtre passe-bas (16) ayant une deuxième fréquence de coupure (15) ; et la première fréquence de coupure (14) étant inférieure à la deuxième fréquence de coupure (15).

3. Procédé selon la revendication précédente, dans lequel une largeur de bande du filtre passe-bas (16) est déterminée en fonction du mouvement de sommet de tour et/ou du moment de charge de pale et/ou du mouvement de flotteur.

4. Procédé selon l'une quelconque des revendications précédentes, dans lequel l'éolienne (1) comprend en outre un actionneur de pale supplémentaire qui est disposé au niveau d'une surface de la pale (6), dans lequel l'actionneur de pale supplémentaire est commandé sur la base d'une référence d'actionneur de pale supplémentaire, et dans lequel le procédé comprend les étapes consistant à :
détecter une quantité d'un mouvement de corps flottant, un moment de charge de pale et/ou un mouvement de sommet de tour et/ou déterminer une fréquence d'oscillation du mouvement de tangage d'éolienne, une vitesse d'oscillation respective, et/ou une accélération d'oscillation pour déterminer si un mouvement de tangage d'éolienne est face au vent ou sous le vent ;
après avoir reçu la demande d'arrêt, sélectionner, sur la base de la détermination consistant à savoir si le mouvement de tangage d'éolienne est face au vent ou sous le vent, une fréquence de coupure d'un autre filtre passe-bas pour la référence d'actionneur de pale supplémentaire ;
si le mouvement de tangage d'éolienne est face au vent, filtrer la référence d'actionneur de pale supplémentaire par l'autre filtre passe-bas ayant une troisième fréquence de coupure ; et
si le mouvement de tangage d'éolienne est sous le vent, filtrer la référence d'actionneur de pale supplémentaire par l'autre filtre passe-bas ayant une quatrième fréquence de coupure ; et
la troisième fréquence de coupure étant inférieure à la quatrième fréquence de coupure.

5. Procédé selon l'une quelconque des revendications précédentes, comprenant les étapes consistant à :
détecter une quantité d'un mouvement de corps flottant, un moment de charge de pale et/ou un mouvement de sommet de tour et/ou déterminer une fréquence d'oscillation du mouvement de tangage d'éolienne, une vitesse d'oscillation respective, et/ou une accélération d'oscillation pour déterminer si un mouvement de tangage d'éolienne est face au vent ou sous le vent ;
retarder l'arrêt du fonctionnement de l'éolienne flottante (1) si le mouvement de tangage d'éolienne est face au vent ;
détecter quand une position de sommet de tour est sensiblement au niveau d'une position la plus face au vent et/ou quand la vitesse de tangage du flotteur passe de négative à positive ; et
initier l'arrêt du fonctionnement de l'éolienne flottante après que la position de sommet de tour a sensiblement atteint la position la plus face au vent.

6. Procédé selon l'une quelconque des revendications précédentes, dans lequel une sortie de puissance provenant du générateur est commandée sur la base d'une référence de sortie de puissance, et le procédé comprend les étapes consistant à :
retarder l'arrêt du fonctionnement de l'éolienne flottante (1), tout en augmentant la sortie de puissance pour réduire une vitesse de rotor, en particulier tout en n'augmentant pas ou en ne diminuant pas un angle de calage de pale d'au moins une des pales de rotor ; et
initier l'arrêt du fonctionnement de l'éolienne (1) après avoir réduit la vitesse de rotor.

7. Procédé selon la revendication précédente, dans lequel l'arrêt du fonctionnement de l'éolienne (1) est réalisé en augmentant une référence de calage de pale pour augmenter un angle de calage de pale des pales (6).

8. Éolienne flottante (1) comprenant un corps flottant (4), une tour (2) montée sur le corps flottant (4), une nacelle (3) montée sur la tour (2), un rotor monté de manière rotative sur la nacelle (3) et ayant un moyeu et au moins une pale (6), en particulier une pluralité de pales (6), un générateur relié au rotor pour générer de la puissance électrique, et un dispositif de commande, dans laquelle le dispositif de commande est configuré pour réaliser le procédé selon l'une des revendications précédentes.

9. Produit de programme informatique comprenant des instructions pour amener le dispositif de commande de l'éolienne flottante (1) de la revendication 8 à réaliser le procédé des revendications 1 à 7.

10. Support de stockage lisible par ordinateur sur lequel est stocké le produit de programme informatique de la revendication 9.

11. Procédé de fonctionnement d'une éolienne offshore flottante (1), comprenant le fonctionnement de l'éolienne offshore flottante (1) de la revendication 8 et/ou l'arrêt de l'éolienne offshore flottante (1) selon un procédé selon les revendications 1 à 7.

12. Procédé selon la revendication 11 comprenant la génération, par l'éolienne offshore (1), de puissance électrique et/ou d'énergie électrique.

13. Procédé selon la revendication 12 comprenant la transmission d'au moins une partie de la puissance électrique et/ou de l'énergie électrique à un agencement de réception électrique non positionné dans les eaux internationales, en particulier positionné à terre, sur terre ; et la fourniture d'au moins une partie de la puissance électrique et/ou de l'énergie électrique à un réseau de distribution, en particulier un réseau de distribution terrestre.
